# EUROPEAN PATENT APPLICATION

(11) **EP 1 956 217 A1**
(43) Date of publication of application: **13.08.2008**
(21) Application number: 05807064.0
(22) Date of filing: 18.11.2005
(51) Int. Cl.: F02D 13/02, F01L 7/02, F02B 69/06

(54) **INTERNAL COMBUSTION ENGINE**

(71) Applicant: Ataka Engineering Co., Ltd., Tokyo 177-0035 (JP)
(72) Inventor: ATAKA, Shinichi, Tokyo 177-0035 (JP)
(74) Representative: Solf, Alexander
(86) International application number: PCT/JP2005/021215
(87) International publication number: WO 2007/057965

(57) **Abstract**

An internal combustion engine includes a cylinder having a combustion chamber and an exhaust passage that can discharge gas from the combustion chamber, at least one valve body that is provided in the cylinder and can take an open state in which the combustion chamber and the exhaust passage communicate with each other and a closed state in which the combustion chamber and the exhaust passage are shut off, and a piston that reciprocatingly moves in the combustion chamber. The internal combustion engine can switch an operation cycle to two-cycle operation in which the piston reciprocates once and four-cycle operation in which the piston further reciprocates once in the open state of the valve body in addition to the two-cycle operation. The internal combustion engine includes detecting means for detecting a throttle opening or information concerning the throttle position and control means for controlling opening and closing timing when the valve body comes into the open state or the closed state. The control means controls the opening and closing timing on the basis of the information obtained by the detecting means, whereby the operation cycle is switched.

## Description

### Technical Field

The present invention relates to an internal combustion engine.

### Background Art

Conventionally, there is known an internal combustion engine that can switch two-cycle operation and four-cycle operation (a variable cycle engine) (e.g., JP-A-2000-170545). This internal combustion engine includes a cylinder head that has a combustion chamber on a lower surface thereof and a cylinder block that stores a piston that is opposed to the combustion chamber and repeats reciprocating motion. The cylinder head includes an intake port serving as a gas passage for leading unburned gas into the combustion chamber from the outside of the cylinder head and an exhaust port serving as a gas passage for exhausting burned gas in the combustion chamber. In openings in the combustion chamber for the intake gas passage and the exhaust gas passage, umbrella-like (mushroom-like) valves for opening and closing the openings are provided.

Two cam mechanisms (actuators) for driving the valves are provided in the internal combustion engine. One cam mechanism is a cammechanism used in performing the two-cycle operation (a two-cycle operation cam). The other cam mechanism is a cam mechanism used in performing the four-cycle operation (a four-cycle operation cam). These cam mechanisms are switched by a cam switching mechanism.

However, in such an internal combustion engine, since the respective cam mechanisms are switched by using (via) the cam switching mechanism as described above, it is difficult to quickly switch the cam mechanisms (with high follow-up ability). Therefore, fuel efficiency of the internal combustion engine falls.

### Disclosure of the Invention

It is an object of the present invention to provide an internal combustion engine that can quickly and surely switch an operation cycle to two-cycle operation and four-cycle operation to thereby realize improvement of fuel efficiency.

In order to attain the object, the present invention provides an internal combustion engine including:
a cylinder having a combustion chamber and an exhaust passage that can discharge gas from the combustion chamber;
at least one valve body that is provided in the cylinder and can take an open state in which the combustion chamber and the exhaust passage communicate with each other and a closed state in which the combustion chamber and the exhaust passage are shut off; and
a piston that reciprocatingly moves in the combustion chamber,
the internal combustion engine being capable of switching an operation cycle to two-cycle operation in which the piston reciprocates once and four-cycle operation in which the piston further reciprocates once in the open state of the valve body in addition to the two-cycle operation, wherein
the internal combustion engine includes:
   detecting means for detecting a throttle opening or information concerning the throttle position; and
   control means for controlling opening and closing timing when the valve body comes into the open state or the closed state, and
   the control means controls the opening and closing timing on the basis of the information obtained by the detecting means, whereby the operation cycle is switched.

Consequently, it is possible to quickly and surely switch the operation cycle to the two-cycle operation and the four-cycle operation to thereby realize improvement of fuel efficiency.

In the internal combustion engine according to the present invention, it is preferable to switch the operation cycle to the four-cycle operation when the throttle opening is smaller than a predetermined set value set in advance and switch the operation cycle to the two-cycle operation when the throttle opening is equal to or larger than the set value.

Consequently, it is possible to surely switch the operation cycle to the two-cycle operation and the four-cycle operation to thereby realize improvement of fuel efficiency.

In the internal combustion engine according to the present invention, it is preferable that the two-cycle operation includes a fuel supplying and compressing step of compressing gas in the combustion chamber while supplying fuel into the combustion chamber, a burning step of burning an air fuel mixture as a mixture of the supplied fuel and the gas, and an air supply, scavenging, and exhaust step of discharging the gas from the combustion chamber while supplying the gas into the combustion chamber, and the four-cycle operation further includes, after the air supply, scavenging, and exhaust step, an exhaust step of further discharging the burned air fuel mixture, an intake step of sucking the air into the combustion chamber, and an exhaust step of discharging the sucked gas.

Consequently, it is possible to efficiently switch the operation cycle to the two-cycle operation and the four-cycle operation.

In the internal combustion engine according to the present invention, it is preferable that the detecting means detects the information after the air supply, scavenging, and exhaust step.

Consequently, it is possible to efficiently switch the operation cycle to the two-cycle operation and the four-cycle operation.

In the internal combustion engine according to the present invention, it is preferable that, in a state of the two-cycle operation, the control means
(1) brings the valve body in the open state into the closed state in the fuel supplying and compressing step when the two-cycle operation is maintained, and
(2) maintains the valve body in the open state in the exhaust step after the air supply, scavenging, and exhaust step when the two-cycle operation is switched to the four-cycle operation.

Consequently, it is possible to quickly and surely switch the operation cycle to the two-cycle operation and the four-cycle operation to thereby realize improvement fuel efficiency.

In the internal combustion engine according to the present invention, it is preferable that, in a state of the four-cycle operation, the control means
(1) maintains the valve body in the open state in the exhaust step after the air supply, scavenging, and exhaust step when the four-cycle operation is maintained, and
(2) brings the valve body in the open state into the closed state in the air supply, scavenging, and exhaust step when the four-cycle operation is switched to the two-cycle operation.

Consequently, it is possible to quickly and surely switch the operation cycle to the two-cycle operation and the four-cycle operation to thereby realize improvement of fuel efficiency.

In the internal combustion engine according to the present invention, it is preferable that the internal combustion engine further includes an accelerator pedal, and the detecting means detects, as a current value, the throttle opening at the time when the accelerator pedal is stepped on.

Consequently, it is possible to quickly and surely switch the operation cycle to the two-cycle operation and the four-cycle operation to thereby realize improvement of fuel efficiency.

In the internal combustion engine according to the present invention, it is preferable that the cylinder includes a cylinder main body that houses the piston and a cylinder head set above the cylinder main body.

Consequently, it is possible to surely change the valve body to the open state and the closed state.

In the internal combustion engine according to the present invention, it is preferable that the valve body is rotatably set on the cylinder head and formed in a substantially spherical shape having a through hole, and
according to the rotation of the valve body, in the open state, the combustion chamber and the exhaust passage communicate with each other through the through hole and, in the closed state, one end or both ends of the through hole are closed by an inner wall of the cylinder head and the combustion chamber and the exhaust passage are shut off.

Consequently, it is possible to surely rotate the valve body to thereby surely change the valve body to the open state and the closed state.

In the internal combustion engine according to the present invention, it is preferable that a rotation axis of the valve body is substantially parallel to the exhaust passage.

Consequently, it is possible to surely change the valve body to the open state and the closed state.

In the internal combustion engine according to the present invention, it is preferable that the internal combustion engine includes an actuator that rotates the valve body.

Consequently, it is possible to surely rotate the valve body to thereby surely change the valve body to the open state and the closed state.

In the internal combustion engine according to the present invention, it is preferable that the actuator includes an annular worm wheel provided in an outer periphery of the valve body, a worm that meshes with the worm wheel, and a motor that drives to rotate the worm.

Consequently, it is possible to surely rotate the valve body to thereby surely change the valve body to the open state and the closed state.

In the internal combustion engine according to the present invention, it is preferable that the motor is a stepping motor.

Consequently, it is possible to surely open and close the valve body at accurate valve timing (opening and closing timing). Further, it is possible to freely set timing of exhaust according to setting of an operation pattern of the stepping motor (a rotation and stop pattern of the valve body). Therefore, a degree of freedom of design increases.

In the internal combustion engine according to the present invention, it is preferable that the worm wheel projects from the surface of the valve body, and
the internal combustion engine further includes annular valve body supporting members that come into contact with sides of the worm wheel and rotatably support the valve body.

Consequently, it is possible to surely rotate the valve body to thereby surely change the valve body to the open state and the closed state.

In the internal combustion engine according to the present invention, it is preferable that the valve body supporting members are provided on both sides of the worm wheel across the worm wheel.

Consequently, it is possible to surely rotate the valve body to thereby surely change the valve body to the open state and the closed state.

In the internal combustion engine according to the present invention, it is preferable that the internal combustion engine includes seal means for preventing leakage of fluid, at least a part of the seal means being located between the cylinder head and the valve body.

Consequently, it is possible to surely prevent leakage of fluid.

In the internal combustion engine according to the present invention, it is preferable that the seal means includes an oil seal that prevents leakage of lubricant.

Consequently, it is possible to surely prevent leakage of lubricant.

In the internal combustion engine according to the present invention, it is preferable that the seal means includes a gas seal that prevents leakage of the gas in the combustion chamber.

Consequently, it is possible to surely prevent leakage of the gas in the combustion chamber.

In the internal combustion engine according to the present invention, it is preferable that the seal means displays a seal function thereof regardless of a rotation angle of the valve body.

Consequently, since the seal function is always displayed regardless of a rotation angle of the valve body, it is possible to surely prevent leakage of fluid.

In the internal combustion engine according to the present invention, it is preferable that the seal means includes an oil seal that prevents leakage of lubricant and a gas seal that prevents leakage of the gas in the combustion chamber,
the oil seal displays a seal function thereof regardless of a rotation angle of the valve body, and
the gas seal displays a seal function thereof in synchronization with the rotation of the valve body.

Consequently, since the seal function is always displayed regardless of a rotation angle of the valve body, it is possible to surely prevent leakage of oil (leakage of lubricant) and leakage of the gas (compressed mixed gas, exhaust gas, etc.) in the combustion chamber.

In the internal combustion engine according to the present invention, it is preferable that the internal combustion engine includes means for causing the oil seal and/or the gas seal to increase the seal function thereof when the valve body is in the closed state.

Consequently, it is possible to more surely prevent leakage of fluid.

In the internal combustion engine according to the present invention, it is preferable that the internal combustion engine includes urging means for urging at least a part of the seal means to be pressed against the valve body.

Consequently, it is possible to more surely prevent leakage of fluid.

In the internal combustion engine according to the present invention, it is preferable that an urging force generated by the urging means changes in synchronization with the rotation of the valve body.

Consequently, since the seal means receives a strong urging force only when necessary (when the pressure in the combustion chamber should be maintained high) and displays an effective seal effect, there is an advantage that smooth rotation of the valve body is not prevented.

In the internal combustion engine according to the present invention, it is preferable that the urging force generated by the urging means is larger in the closed state than in the open state.

Consequently, since the seal means receives a strong urging force only when necessary (when the pressure in the combustion chamber should be maintained high) and displays an effective seal effect, there is an advantage that smooth rotation of the valve body is not prevented.

In the internal combustion engine according to the present invention, it is preferable that the internal combustion engine includes a pressure transmission path for transmitting the pressure in the combustion chamber, and the internal combustion engine presses the seal means against the valve body by transmitting the pressure in the combustion chamber to at least a part of the seal means via the pressure transmission path and causes the seal means to display or increase the seal function.

Consequently, it is possible to more surely prevent leakage of fluid.

### Brief Description of the Drawings

[Fig. 1] Fig. 1 is a diagram showing a schematic configuration of an internal combustion engine according to the present invention.
[Fig. 2] Fig. 2 is a perspective view showing a valve body in the internal combustion engine shown in Fig 1.
[Fig. 3] Fig. 3 is an enlarged sectional view around the valve body in Fig. 1.
[Fig. 4] Fig. 4 is a diagram showing a flow of a series of operations of the internal combustion engine according to the present invention.
[Fig. 5] Fig. 5 is an operation diagram showing an operation cycle executed by the internal combustion engine according to the present invention.
[Fig. 6] Fig. 6 is an operation diagram showing an operation cycle executed by the internal combustion engine according to the present invention.

### Best Mode for carrying out the Invention

A preferred embodiment of the present invention is explained below with reference to the accompanying drawings.

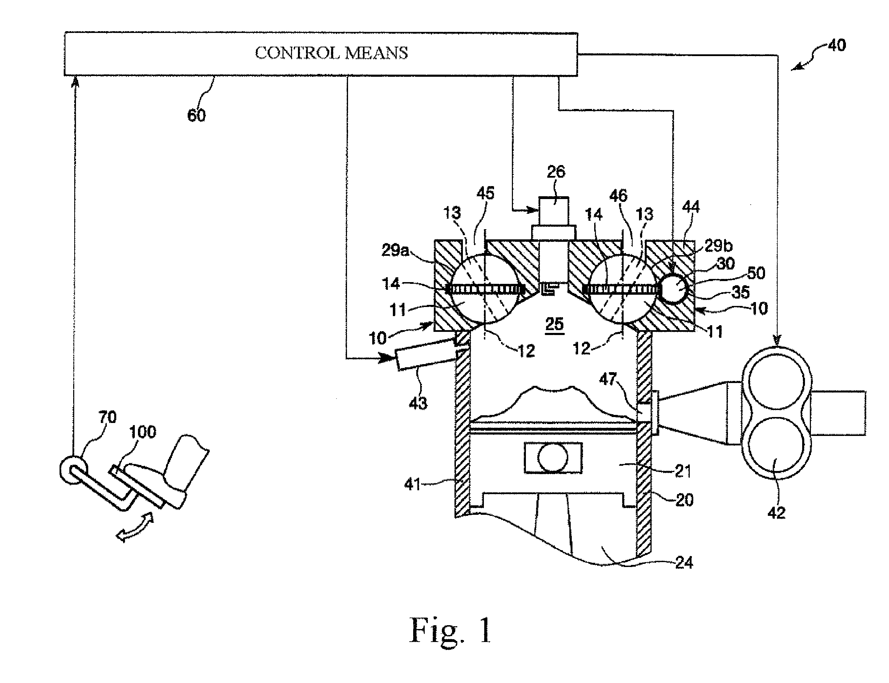

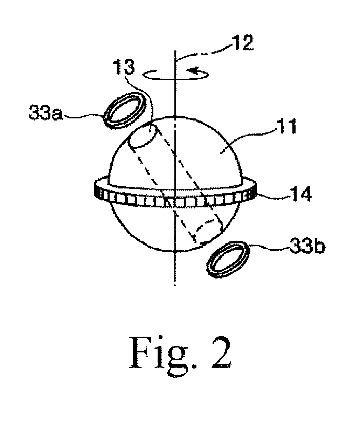

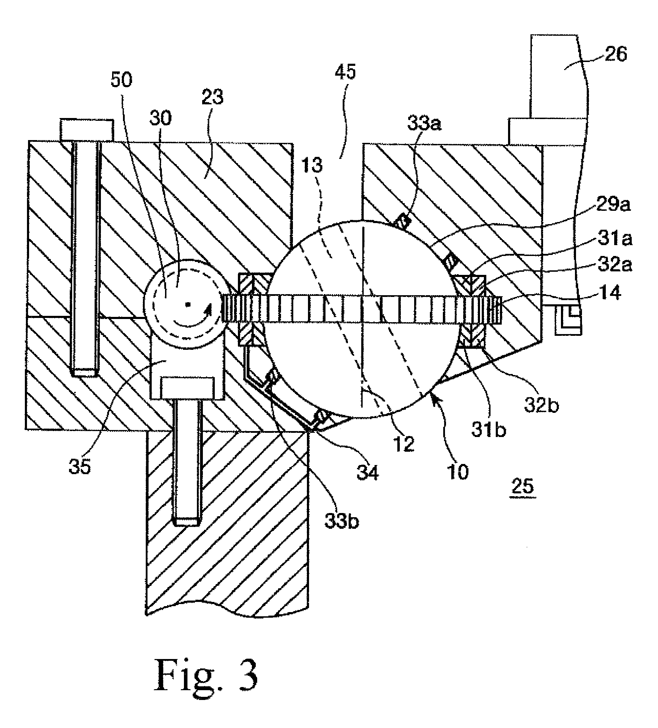

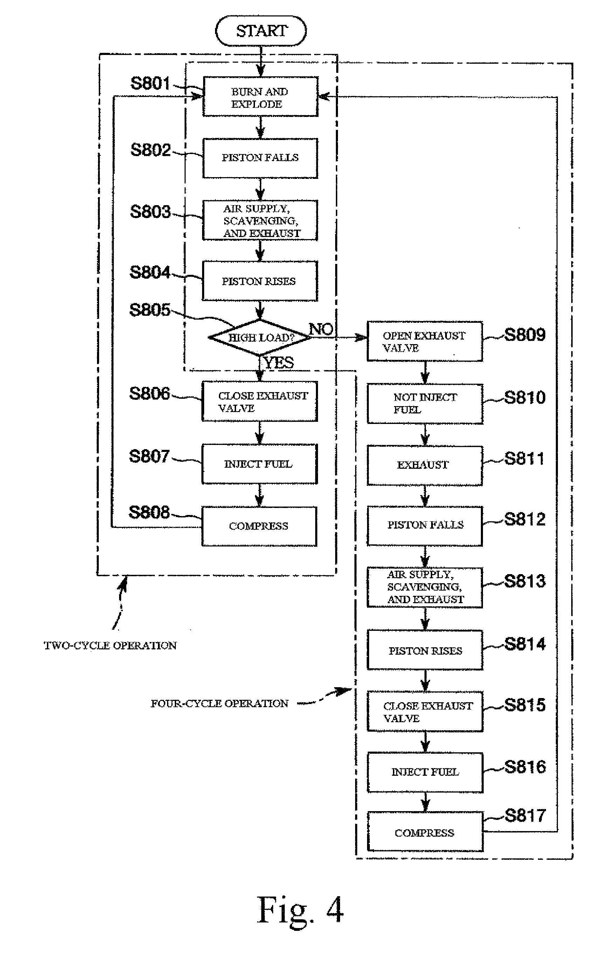

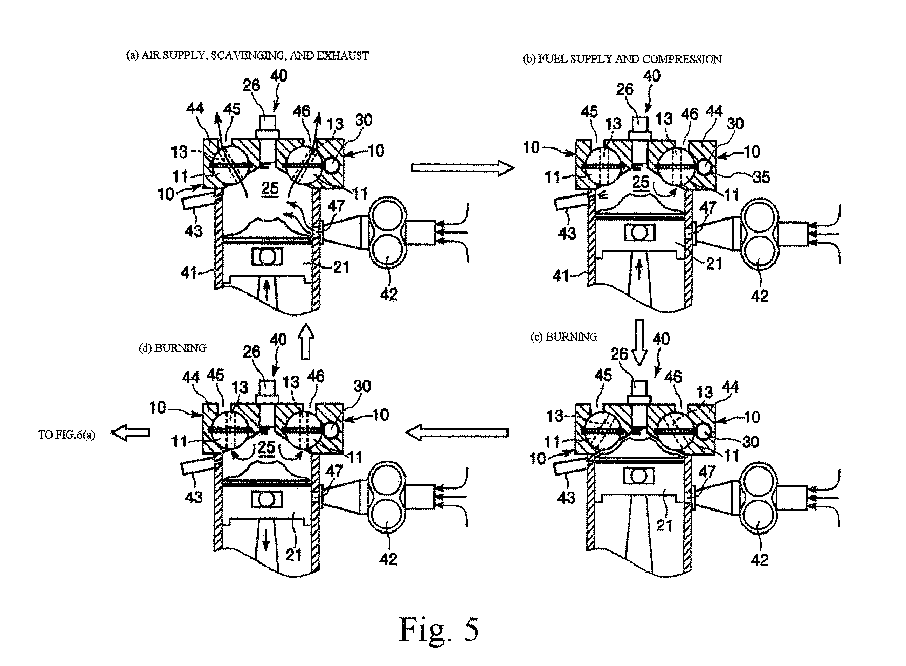

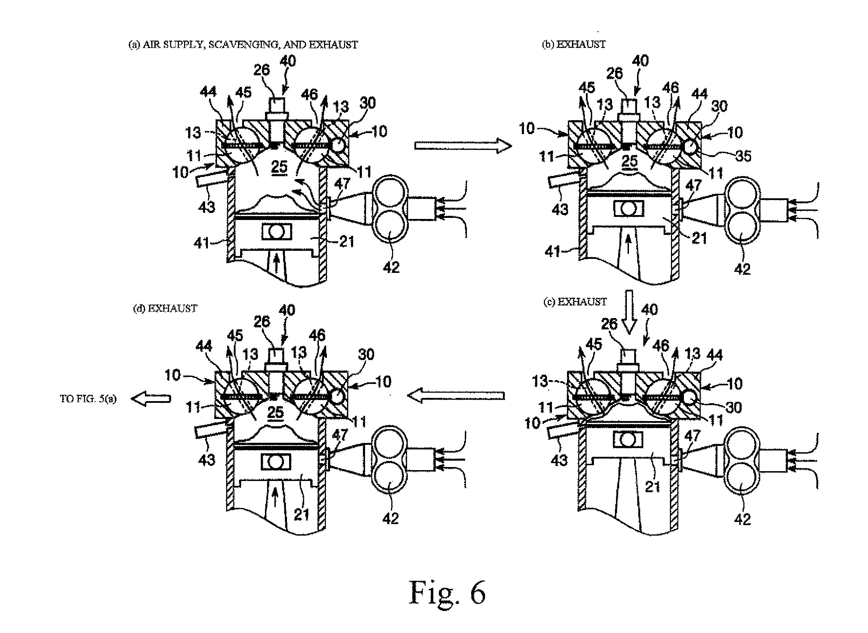

Fig. 1 is a diagram showing a schematic configuration of an internal combustion engine according to the present invention, Fig. 2 is a perspective view showing a valve body in the internal combustion engine shown in Fig. 1, Fig. 3 is an enlarged sectional view around the valve body in Fig. 1, Fig. 4 is a diagram showing a flow of series of operations of the internal combustion engine according to the present invention, and Figs. 5 and 6 are operation diagrams showing operation cycles executed by the internal combustion engine according to the present invention, respectively.

An internal combustion engine 40 shown in Fig. 1 is an internal combustion engine that can switch an operation cycle to two-cycle operation and four-cycle operation. The internal combustion engine 4.0 includes a cylinder 20 and a piston 21 that repeats a reciprocating motion in an up to down direction in the figure in the cylinder 20 (a combustion chamber 25).

The cylinder 20 includes a cylinder block (a cylinder main body) 41 that houses the piston 21 and a cylinder head 44 that is placed at an upper end (an upper part) in the figure of the cylinder block 41 and coupled to the cylinder block 41 by a bolt (not shown in the figure).

Two valve devices 10 (valve bodies 11) are set in the cylinder head 44 (the cylinder 20). The respective valve devices 10 are used as exhaust valves. Since these valve devices have substantially the same structure, in the following explanation, only one valve device 10 may be explained and explanation of the other may be omitted.

The cylinder block 41 is made of aluminum or an aluminum-magnesium alloy. The piston 21 is housed in a cylinder bore 24, which is a cylindrical hole. A liner made of cast iron is arranged on an inner side of the cylinder bore 24 or Nikazil plating is applied to the inner side.

The cylinder head 44 includes a pent roof type combustion chamber 25 opened in an end face in a lower part of the figure, an ignition plug (an ignition unit) 26, an electrode section of which is exposed to the combustion chamber 25, valve body housing spaces 29a and 29b that communicate with the combustion chamber 25, and exhaust gas passages (exhaust passages) 45 and 46 that communicate with the valve body housing spaces 29a and 29b, respectively.

The valve body housing spaces 29a and 29b are formed in a shape surrounded by a spherical concave surface. The valve bodies 11 included in the valve devices 10 are set in the valve body housing spaces 29a and 29b, respectively. In this embodiment, the cylinder head 44 configures a housing for the valve devices 10. The valve devices 10 are provided adjacent to the combustion chamber 25 of the internal combustion engine 40.

The exhaust gas passages 45 and 46 are formed substantially in parallel to a moving direction of the piston 21.

As shown in Fig. 3, a worm 30 that rotates by, for example, driving of an electric motor 50 (e.g., a stepping motor) is provided (in Fig. 1, a worm on the left side is not shown) . The worm 30 is housed in a worm housing space 35 formed in the cylinder head 44.

As shown in Fig. 2, the valve body 11 is formed in a substantially spherical shape. A through hole 13 is formed in the valve body 11. The valve body 11 rotates around a rotation axis 12. A worm wheel (gear) 14 formed in an annular shape around the rotation axis 12 is formed to project on a surface (an outer periphery) of the valve body 11.

In a configuration shown in the figure, the through hole 13 passes through the center of the valve body 11. However, the through hole 13 may be formed in a position not passing through the center of the valve body 11. The through hole 13 does not have to be a straight hole shown in the figure and may be a hole having a curved or bent portion.

An inner diameter of the through hole 13 may be identical over the entire length or may be changed in the middle. Diameters of openings at both ends of the through hole 13 may be identical or may be different. However, the diameters preferably have values as close as possible.

The through hole 13 is formed to be inclined a predetermined angle with respect to the rotation axis 12. When the valve body 11 rotates, the through hole 13 performs a swivel (precession) motion around the center of the valve body 11. Therefore, the openings at both the ends of the through hole 13 in the valve body 11 respectively move on circumferences having predetermined diameters (eccentrically rotate) according to the rotation of the valve body 11.

The worm wheel 14 is arranged (formed) on the surface of the valve body 11 such that a rotation surface thereof becomes orthogonal to the rotation axis 12. In other words, a rotation axis of the worm wheel 14 coincides with the rotation axis 12 of the valve body 11. The worm wheel 14 is coupled to the valve body 11 by fitting, welding, or bonding or is formed integrally with the valve body 11.

The worm wheel 14 meshes with the worm 30 and converts the rotation of the worm 30 into the rotation of the valve body 11. The valve body 11 and the worm wheel 14 are made of metal, for example, cast iron, a sintered material, or aluminum and are molded by cutting. It goes without saying that a mechanism for transmitting a rotation force to the valve body 11 is not limited to the worm wheel 14 and the worm 30. Besides, for example, the mechanism may be bevel gears that mesh with each other.

In this way, in the internal combustion engine 40, an actuator that rotates the valve body 11 is configured by the worm wheel 14, the worm 30 that meshes with the worm wheel 14, and the electric motor 50 that drives to rotate the worm 30. The valve body 11 can be surely rotated by the actuator having such a configuration. Therefore, the valve body 11 can be surely changed to an open state and a closed state.

As shown in Fig. 1, the rotation axis 12 of the valve body 11 of the valve device 10 on the exhaust gas passage 45 side (the left side in the figure) is substantially parallel to the exhaust gas passage 45. According to the rotation of the valve body 11, the valve device 10 is switched to an valve open state (an open state (a state shown in Fig. 3)) in which the exhaust gas passage 45 and the combustion chamber 25 communicate with each other through the through hole 13 and a valve closed state (a closed state (e.g., a state shown in Fig. 5 (c))) in which both the ends of the through hole 13 are closed by an inner wall of the valve body housing space 29a of the cylinder head 44 and the exhaust gas passage 45 and the combustion chamber 25 are shut off. In the valve open state, gas can be surely discharged from the inside of the combustion chamber 25. In the valve closed state, gas is surely prevented from being discharged from the inside of the combustion chamber 25.

In the valve closed state, only one end of the through hole 13 may be closed by the inner wall of the valve body housing space 29a of the cylinder head 44 and the other end of the through hole 13 may be entirely or partially opened. However, as in this embodiment, it is preferable that, in the valve closed state, both the ends of the through hole 13 are closed by the inner wall of the valve body housing space 29a of the cylinder head 44. This makes it possible to more surely prevent leakage of combustion gas.

Similarly, the rotation axis 12 of the valve body 11 of the valve device 10 on the exhaust gas passage 46 side (the right side in Fig. 1) is substantially parallel to the exhaust gas passage 46. According to the rotation of the valve body 11, the valve device 10 is switched to an valve open state (an open state (a state shown in Fig. 1)) in which the exhaust gas passage 46 and the combustion chamber 25 communicate with each other through the through hole 13 and a valve closed state in which both the ends of the through hole 13 are closed by an inner wall of the valve body housing space 29b of the cylinder head 44 and the exhaust gas passage 46 and the combustion chamber 25 are shut off.

As shown in Fig. 3, the valve device 10 includes two annular (ring-like) metal bearings (valve body supporting members) 31a and 31b that are in contact with upper and lower surfaces in Fig. 3 of the worm wheel 14, respectively, around the valve body 11 and rotatably support the valve body 11, two annular (ring-like) oil seals 32a and 32b that are in contact with the upper and lower surfaces in Fig. 3 of the worm wheel 14, respectively, and arranged in outer peripheries of the metal bearings 31a and 31b, respectively, and two annular (ring-like) metal seals 33a and 33b arranged in positions rotated a predetermined angle counterclockwise from the rotation axis 12 of the valve body 11 in Fig. 3. The center of the rings of the metal bearings 31a and 31b and the oil seals 32a and 32 generally coincides with the rotation axis 12.

Seal means is configured by the metal bearings 31a and 31b, the oil seals (seal members) 32a and 32b, and the metal seals (seal members) 33a and 33b. In Fig. 1, the metal bearings 31a and 31b, the oil seals 32a and 32b, and the metal seals 33a and 33b are not shown.

The two metal bearings 31a and 31b are in contact with the upper and lower surfaces in Fig. 3 of the worm wheel 14, respectively, and located on both sides of the worm wheel 14 across the worm wheel 14. The metal bearings 31a and 31b function as bearings (valve body supporting members) that rotatably support the valve body 11 and also have a function of preventing leakage of gas (air fuel mixture, exhaust gas, etc.) from the combustion chamber 25.

The two oil seals 32a and 32b are in contact with the upper and lower surfaces in Fig. 3 of the worm wheel 14, respectively, and located on both the sides of the worm wheel 14 across the worm wheel 14.

Lubricant for realizing smooth rotation of the valve body 11 is filled in a region between the valve body housing space 29a (29b) and the valve body 11 and further on an outer peripheral side than the oil seals 32a and 32b. The lubricant is also filled in the worm housing space 35. The lubricant is supplied to a meshing portion of the worm wheel 14 and the worm 30 to secure the smooth rotation. The oil seals 32a and 32b have a function of sealing the lubricant and preventing leakage of the lubricant.

Examples of a material forming the oil seals 32a and 32b include rubber materials (elastic materials) such as silicon rubber, various resin materials, and various ceramic materials. Among these materials, those having heat resistance are preferable.

The two metal seals (gas seals) 33a and 33b are made of ring-like members, respectively. The metal seals 33a and 33b are buried in the cylinder head 44 such that one end faces thereof are exposed in the valve body housing space 29a. Portions (the end faces) of the metal seals 33a and 33b exposed in the valve body housing space 29a form a part of an inner wall surface of the cylinder head 44 that faces the valve body housing space 29a. The portions are in contact (press contact) with the surface of the valve body 11 and slide according to the rotation of the valve body 11.

Inner diameters of the metal seals 33a and 33b are set equal to or larger than the diameters of the openings at both the ends of the through hole 13, respectively. When the valve device 10 is in a valve closed state (e.g., a state shown in Fig. 5(c)), the openings at both the ends of the through hole 13 coincide with or are included in inner side openings of the metal seals 33a and 33b, respectively. In other words, when the valve device 10 is in the valve closed state (during compression and during combustion), the one end faces (the surfaces exposed to the valve body housing space 29a) of the metal seals 33a and 33b are compression-bonded to the surface of the valve body 11 in outer peripheries of openings of the through hole 13. Consequently, the gas in the combustion chamber 25 is prevented from leaking to the outside through the through hole 13. In conjunction with the seal function of the metal bearings 31a and 31b, it is possible to prevent a fall in pressure in the combustion chamber 25 (maintain proper pressure) during compression and during combustion (explosion) of the air fuel mixture in the combustion chamber 25. As a result, it is possible to reduce a loss of output and improve fuel efficiency.

When the valve device 10 is in the valve open state (the state shown in Fig. 3), the metal seals 33a and 33b do not have the function of sealing the openings at both the ends of the through hole 13. In other words, the metal seals 33a and 33b display the seal function thereof in synchronization with the rotation of the valve body 11.

Examples of a material forming the metal seals 33a. and 33b include various metal materials including ferrous metal such as cast iron and carbon steel and nonferrous metal such as a copper alloy and various ceramics such as aluminum. Among these materials, those excellent in heat resistance and abrasion resistance are preferable. Examples of a material forming the metal bearings 31a and 31b include the same materials.

The metal bearings 31a and 31b and the oil seals 32a and 32b are in contact with the worm wheel 14 (the valve body 11) regardless of a rotation angle of the valve body 11. Consequently, the seal function is always displayed regardless of the rotation angle of the valve body 11. Therefore, it is possible to more surely prevent leakage of oil (leakage of lubricant) and leakage of the gas (compressed air fuel mixture, exhaust gas, etc.) in the combustion chamber 25.

Apressuretransmissionpath (urging means) 34 that is opened to one end of the oil seal 32b and the other end of the metal seal 33b (an end on the opposite side of the exposed surface) and communicates with the combustion chamber 25 is formed in the cylinder head 44. Combustion pressure in the combustion chamber 25 is transmitted to an end face of the oil seal 32b and an end face of the metal seal 33b through the pressure transmission path 34. Consequently, the oil seal 32b and the metal seal 33b are urged to be pressed against the worm wheel 14 and the valve body 11 when necessary (when the one end faces of the metal seals 33a and 33b are compression-bonded to the surface of the valve body 11 in the outer peripheries of the openings of the through hole 13 and the openings are sealed in the outer peripheries). The seal functions of the oil seal 32b and the metal seal 33b are intensified (increased).

Although not shown in the figure, members urged by the combustion pressure transmitted through the pressure transmission path 34 are not limited to the members described above (the oil seal 32b and the metal seal 33b). It is preferable that the combustion pressure is transmitted to the oil seal 32a and the metal seal 33a. Consequently, the seal function is further intensified.

In such a valve device 10, the valve body 11 is set such that the rotation axis 12 of the valve body 11 becomes substantially parallel to the exhaust gas passages 45 and 46. Consequently, even if the valve body 11 rotates, the seal members (e.g., the metal bearings 31a and 31b and the metal seals such as the metal seals 33a and 33b) are not exposed in the combustion chamber 25. It is possible to prevent the seal members from scraping out the lubricant to the combustion chamber 25 to thereby prevent deterioration in combustion properties.

The metal seals 33a and 33b have the function of sealing the openings at both the ends of the through hole 13 in the peripheries of the openings during valve opening and preventing leakage of gas. However, only one of the metal seals 33a and 33b, for example, only the metal seal 33b may be set.

The two metal bearings 31a and 31b firmly support the valve body 11. Therefore, even when the impact of explosion affects the valve body 11, it is possible to surely seal spaces between the inner walls of the valve body housing spaces 29a and 29b and the surface of the valve body 11 and prevent the combustion pressure in the combustion chamber 25 from leaking. Consequently, it is possible to stabilize combustion in the combustion chamber 25, prevent the lubricant filled among the valve body housing spaces 29a and 29b, the valve body 11, and the metal bearings 31a and 31b from leaking to intrude in the combustion chamber 25, and surely prevent deterioration in the combustion properties.

The two oil seals 32a and 32b arranged in the outer peripheries of the two metal bearings 31a and 31b seal the lubricant for realizing smooth rotation of the valve body 11. Therefore, it is possible to more surely prevent the lubricant from leaking to intrude in the combustion chamber 25. It is possible to continuously realize smooth rotation of the valve body 11. The two metal bearings 31a and 31b and the two oil seals 32a and 32b come into contact with (close contact with) the upper and lower surfaces of the worm wheel 14 . Therefore, it is possible to surely prevent leakage of the filled lubricant.

Moreover, in the valve device 10, the two metal seals 33a and 33b seal the openings at both the ends of the through hole 13 of the valve body 11 in the peripheries of the openings when necessary. Therefore, it is possible to effectively prevent leakage of combustion gas and the like from the combustion chamber 25 and maintain the pressure in the combustion chamber 25 at proper pressure.

In the valve device 10, the oil seal 32b (and the oils seal 32a), the metal seal 33b (and the metal seal 33a), and the like are urged to be pressed against the worm wheel 14 and the valve body 11 by pressurization via the pressure transmission path 34. Therefore, it is possible to reduce a loss of combustion pressure due to leakage of combustion gas and more surely prevent leakage of the filled lubricant. In this case, an urging force of the urging means for urging the oil seal 32b, the metal seal 33b, and the like changes with time in synchronization with the rotation of the valve body 11 (according to an operation state of the internal combustion engine 40) . In other words, the urging force received by the oil seals 32b and the metal seal 33b corresponds to a change in pressure in the combustion chamber 25. For example, a strong urging force is received during combustion (explosion). On the contrary, a weak urging force is received during intake and during exhaust. When the urging force received by the oil seal 32b and the metal seal 33b increases, the seal function thereof increases. In this way, the oil seal 32b and the metal seal 33b are not always urged with a strong urging force but receive the strong urging force only when necessary (when the pressure in the combustion chamber 25 should be maintained high) and display an effective seal effect. Therefore, there is an advantage that smooth rotation of the valve body 11 is not prevented. Since the seal members are urged by using a change in the pressure in the combustion chamber 25, in particular, combustion pressure, it is unnecessary to separately provide a complicated mechanism for urging. There is an advantage that it is possible to obtain the effect described above with a simple configuration.

As shown in Fig. 1, the internal combustion engine 40 includes a blower 42 arranged on a sidewall of the cylinder block 41 via a cylinder vent hole 47 drilled in the sidewall and a fuel injection device (an injector) 43 arranged on the sidewall to be opposed to the blower 42.

The blower (e.g., a supercharger or a turbocharger) 42 supplies, via the cylinder vent hole 47, high-pressure air toaspace (hereinafter referred to as "compression and expansion space") surrounded by a top surface of the piston 21 including the combustion chamber 25, the sidewall of the cylinder block 41, and a lower surface of the cylinder head 44. The injector 43 injects atomized fuel in the compression and expansion space. The blower 42 may be a blower of any one of a root type, a scroll type, and a Lysholm type.

As shown in Fig. 1, the internal combustion engine 40 includes control means (an electronic control device) 60.

The control means 60 is configured by a computer having a publicly-known configuration in which a CPU, memories (a ROM and a RAM), an AD converter, and the like are connected by a bidirectional bus. The control means 60 performs basic control such as fuel injection control for injection into the combustion chamber 25 (control of the injector 43 and the like), ignition time control (control of the ignition plug 26 and the like), and operation control for the valve device 10. In order to perform these kinds of control, information such as the number of revolutions of the internal combustion engine 40 obtained from a not-shown sensor and an accelerator opening (an amount of depression of an accelerator pedal by a driver (a throttle opening)) detected (obtained) by an accelerator opening sensor 70 serving as detecting means is inputted to the control means 60.

The accelerator opening sensor 70 detects an amount of depression of an accelerator pedal 100 as a current value (an electric signal).

The control means 60 is configured to compare the current value and a threshold (a predetermined set value) stored (set) in advance in the control means 60. Consequently, it is possible to judge whether an accelerator opening is large. For example, the control means 60 compares a detected current value and the threshold and, when the detected current value is larger than the threshold, judges that the accelerator opening is large and, when the detected current value is smaller than the threshold, judges that the accelerator opening is small.

The control means 60 is connected to a driving control unit (not shown) for the injector 43 and the ignition plug 26 of the internal combustion engine and controls fuel injection and ignition time of the internal combustion engine 40. The control means 60 is also connected to the actuator (the electric motor 50) of the valve device and controls actuation of the actuator to thereby control opening and closing timing of the valve body 11 when the valve body 11 comes into the valve open state or the valve closed state.

In the valve device 10, the reciprocating umbrella-like valve in the past is not used. Therefore, an energy loss due to the influence of inertial resistance and the like of the umbrella-like valve is small and a pumping loss due to the influence of an umbrella portion of the valve, which is an obstacle to intake and exhaust, is also small. Since the reciprocating motion of the umbrella-like valve is not performed, it is possible to easily and accurately set and change, for example, periods, timing, and the like of a valve opening action and a valve closing action. Since a valve seat as a seating portion of the umbrella-like valve is not used, it is possible to improve durability of the entire valve device 10 as a whole. Moreover, unlike the umbrella-like valve, the valve itself does not periodicallyproj ect into the combustion chamber 25. Therefore, it is unnecessary to secure a space for projection of the valve in the combustion chamber 25 and it is possible to reduce a dead space in the combustion chamber 25. As a result, it is possible to increase a compression ratio and realize improvement of combustion efficiency. Furthermore, since a valve spring for urging the umbrella-like valve is not provided, there is no limitation on the engine speed due to surging and higher-speed rotation is possible.

The height of the internal combustion engine 40 to which the valve device 10 is appliedcanbe reduced. Therefore, it is possible to lower a bonnet hood line of a vehicle and increase a size of an impact absorbing space that functions as a cushioning material when the vehicle collides with a person. Therefore, it is possible to improve design properties of the vehicle and improve human safety. Moreover, in the valve device 10, since the reciprocating motion in the umbrella-like valve in the past is not performed, it is possible to improve sound vibration performance.

In the valve device 10, roller bearings can be used as the metal bearings 31a and 31b. Consequently, it is possible to further reduce friction of the internal combustion engine 40.

In such a valve device 10, a stepping motor may be used as a driving source for rotating the valve body 11. By using the stepping motor, it is possible to surely open and close the valve device 10 at accurate valve timing (opening and closing timing). It is possible to freely set timing of exhaust (opening and closing timing) according to setting of an operation pattern of the stepping motor (a rotation and stop pattern of the valve body 11). Therefore, a degree of freedom of design increases.

The internal combustion engine 40 having the configuration described above can switch the operation cycle to the two-cycle operation or the four-cycle operation as described above. Usually, an accelerator opening of the two-cycle operation is larger than an accelerator opening during the four-cycle operation.

Respective operation cycles of the internal combustion engine 40 controlled by the control means 60 are explained with reference to Figs. 4 to 6. As an example, the internal combustion engine 40 is executing the two-cycle operation in advance (already).

[1] Burning step As shown in Fig. 5(c), when the piston 21 has reached a general top dead center, the ignition plug 26 sends out sparks in an electrode section thereof, ignites an air fuel mixture (a mixture of fuel supplied into the combustion chamber 25 and the gas in the combustion chamber 25) in the compressed compression and expansion space (the combustion chamber 25), and explodes (burns) the air fuel mixture (step S801) . At this point, since the valve devices 10 are in the valve closed state, the exhaust gas passages 45 and 46 do no communicate with the combustion chamber 25. Therefore, a combustion pressure caused by the explosion of the air fuel mixture pushes the top surface of the piston 21 downward in the figure, whereby the piston 21 falls downward in the figure (step S802).

Subsequently, as shown in Fig. 5(d), as the piston 21 falls downward in the figure, the valve bodies 11 of the valve devices 10 further rotate. However, the exhaust gas passages 45 and 46 still do not communicate with the combustion chamber 25 until the piston 21 reaches a bottom dead center.

[2] Air supply, scavenging, and exhaust step Subsequently, as shown in Fig. 5 (a) (Fig. 6 (a) as well), when the piston 21 reaches the bottom dead center, the blower 42 supplies high-pressure air (gas) to the compression and expansion space via the cylinder vent hole 47 (air supply and scavenging). At this point, the valve bodies 11 of the respective valve devices 10 rotate about 180 degrees from the point of Fig. 5(c) and come into the valve open state. Consequently, the exhaust gas passages 45 and 46 and the combustion chamber 25 communicate with each other via the through hole 13. Burned gas in the compression and expansion space is exhausted from the exhaust gas passages 45 and 46 to the outside (steps S803 and S804).

[3] Detection and judgment Subsequently, the control means 60 actuates the accelerator opening sensor 70 to detect an accelerator opening. Thereafter, the control means 60 judges whether a state in which the detected accelerator opening is large is maintained (step S805). When it is judged that the state in which the accelerator opening is large is maintained, as shown in Fig. 5(b), as the piston 21 rises upward in the figure, the valve bodies 11 of the respective valve devices 10 further rotate and come into the valve closed state and the exhaust gas passages 45 and 46 and the combustion chamber 25 are shut off (step S806).

[4] Fuel supply and compression step After the operation in [3], the compression and expansion space is closed and the pressure in the compression and expansion space rises (see Fig. 5(b)). At this point, the injector 43 injects (supplies) fuel to the compressed compression and expansion space and fills the compression and expansion space with an air fuel mixture of the air and the fuel (steps S807 and S808).

After the execution of step 5808, the control means 60 returns to step S801 and sequentially executes step S801 and subsequent steps. The two-cycle operation is maintained through steps [1] to [4].

[5] Exhaust step When it is judged that the accelerator opening decreases as a result of the judgment in step S805, as shown in Fig. 6 (b), the valve bodies 11 of the respective valve devices 10 maintains the valve open state (step S809). Consequently, the operation cycle of the internal combustion engine 40 is switched from the two-cycle operation to the four-cycle operation.

As shown in Fig. 6(b), in the valve open state, the injection of the fuel to the compression and expansion space by the injector 43 is not performed (step S810).

As shown in Fig. 6 (c), since the piston 21 rises upward in the figure, the gas (burned gas) in the compression and expansion space is further discharged from the exhaust gas passages 45 and 46 (step S811).

[6] Intake step The piston 21 in the state of Fig. 6(c) falls downward in the figure (step S812). Consequently, the gas is sucked into the combustion chamber 25.

[7] Exhaust step As shown in Fig. 6 (d), the piston 21 rises upward in the figure again. Consequently, the gas sucked into the combustion chamber 25 in the intake step [6] is discharged.

[8] Air supply, scavenging, and exhaust step. Subsequently, as shown in Fig. 5 (a), when the piston 21 reaches the bottom dead center again, the blower 42 supplies the high-pressure air to the compression and expansion space again via the cylinder vent hole 47 (step S813).

[9] Fuel supply and compression step Thereafter, as shown in Fig. 5(b), as the piston 21 rises upward in the figure (step S814), the valve bodies 11 of the respective valve devices 10 rotate again and come into the valve closed state and the exhaust gas passages 45 and 46 and the combustion chamber 25 are shut off (step S815) . Consequently, the compression and expansion space is closed and the pressure in the compression and expansion space rises. At this point, the injector 43 injects the fuel to the compressed compression and expansion space and fills the compression and expansion space with an air fuel mixture of the air and the fuel (steps S816 and 817).

After the execution of step S817, the control means 60 returns to step S801 and sequentially executes step S801 and subsequent steps.

In this way, in the four-cycle operation, the piston 21 further reciprocates once in the valve open state of the valve bodies 11 in addition to the two-cycle operation.

In the above explanation, as an example, the internal combustion engine 40 has performed the two-cycle operation (steps S801 to S808) in advance. However, the internal combustion engine 40 may have performed the four-cycle operation (steps S801 to S805 and S809 to S817) in advance.

In the state of the four-cycle operation, when it is judged in step S805 that the state in which the accelerator opening is large is maintained, the valve open state of the valve bodies 11 is maintained in the exhaust step [5] after the air supply, scavenging, andexhauststep [2]. Consequently, the four-cycle operation is maintained.

In the state of the four-cycle operation, when it is judged in step S805 that the accelerator opening decreases, the valve bodies 11 in the valve open state is brought into the valve closed state in the air supply, scavenging, and exhaust step [2]. Consequently, the four-cycle operation can be switched to the two-cycle operation.

In the internal combustion engine 40 having the configuration described above, the opening and closing timing of the valve devices 10 is controlled according to a magnitude of the accelerator opening. Consequently, it is possible to quickly and surely switch the operation cycle of the internal combustion engine 40 to the two-cycle operation and the four-cycle operation to thereby realize improvement of fuel efficiency.

The operation of the blower 42 may temporarily stop in association with the up and down movement of the piston 21. However, it is preferable that the blower 42 (always) operates continuously.

The judgment on a magnitude of the accelerator opening is performed after the air supply, scavenging, and exhaust step. However, timing of the judgment on a magnitude of the accelerator opening is not limited to this. For example, the judgment on a magnitude of the accelerator opening may be performed after the fuel supply and compression step or may be performed after the burning step.

Timing when the operation cycle is switched or maintained and timing when an accelerator opening is detected by the operation of the accelerator opening sensor 70 are not limited to be substantially simultaneous. A time lag may occur between the timings.

The internal combustion engine according to the present invention has been explained with reference to the embodiment shown in the figures. However, the present invention is not limited to the embodiment. The respective components of the internal combustion engine can be replaced with arbitrary components that can display the same functions. Arbitrary components may be added.

The present invention can be applied not only to a gasoline engine but also to various internal combustion engines such as a diesel engine, an alcohol engine, and a hydrogen engine.

In this embodiment, the internal combustion engine according to the present invention is mounted on the vehicle. The vehicle is not specifically limited. Examples of the vehicle include a motorcycle, a motor tricycle, and a four wheel car.

In this embodiment, the internal combustion engine according to the present invention is mounted on the vehicle and used. However, the use of the internal combustion engine is not limited to this. For example, the internal combustion engine can be used in any vehicle onwhich the internal combustion engine can be mounted such as construction machines and ships.

In the configuration shown in the figures (e.g., Fig. 1), the internal combustion engine is a combustion engine of a direct injection system for directly supplying fuel into a combustion chamber. However, a system of the internal combustion engine is not limited to this. For example, the internal combustion engine may be internal combustion engines of a carburetor system and a fuel injection system for supplying an air fuel mixture of gas and fuel into a combustion chamber.

The detecting means is not limited to the accelerator opening sensor that detects an accelerator opening. Examples of the detecting means include a crankshaft output sensor and a traction control device that can obtain (detect) information concerning an accelerator opening.

The valve bodies set in the valve devices are not limited to valves formed in a substantially spherical shape. For example, the valve bodies may be valves formed in an umbrella shape (umbrella-like valves).

### Industrial Applicability

The internal combustion engine according to the present invention is an internal combustion engine including a cylinder having a combustion chamber and an exhaust passage that can discharge gas from the combustion chamber, at least one valve body that is provided in the cylinder and can take an open state in which the combustion chamber and the exhaust passage communicate with each other and a closed state in which the combustion chamber and the exhaust passage are shut off, and a piston that reciprocatinglymoves in the combustion chamber. The internal combustion engine can switch an operation cycle to two-cycle operation in which the piston reciprocates once and four-cycle operation in which the piston further reciprocates once in the open state of the valve body in addition to the two-cycle operation. The internal combustion engine includes detecting means for detecting a throttle opening or information concerning the throttle position and control means for controlling opening and closing timing when the valve body comes into the open state or the closed state. The control means controls the opening and closing timing on the basis of the information obtained by the detecting means, whereby the operation cycle is switched. Therefore, it is possible to quickly and surely switch the operation cycle to the two-cycle operation and the four-cycle operation by controlling the opening and closing timing of the valve body. Consequently, it is possible to realize improvement of fuel efficiency of the internal combustion engine. Therefore, the internal combustion engine according to the present invention has industrial applicability.

## Claims

1. An internal combustion engine comprising:
a cylinder having a combustion chamber and an exhaust passage that can discharge gas from the combustion chamber;
at least one valve body that is provided in the cylinder and can take an open state in which the combustion chamber and the exhaust passage communicate with each other and a closed state in which the combustion chamber and the exhaust passage are shut off; and
a piston that reciprocatingly moves in the combustion chamber,
the internal combustion engine being capable of switching an operation cycle to two-cycle operation in which the piston reciprocates once and four-cycle operation in which the piston further reciprocates once in the open state of the valve body in addition to the two-cycle operation, wherein
the internal combustion engine includes:
detecting means for detecting a throttle opening or information concerning the throttle position; and
control means for controlling opening and closing timing when the valve body comes into the open state or the closed state, and
the control means controls the opening and closing timing on the basis of the information obtained by the detecting means, whereby the operation cycle is switched.

2. An internal combustion engine according to claim 1, wherein the internal combustion engine switches the operation cycle to the four-cycle operation when the throttle opening is smaller than a predetermined set value set in advance and switch the operation cycle to the two-cycle operation when the throttle opening is equal to or larger than the set value.

3. An internal combustion engine according to claim 1 or 2, wherein
the two-cycle operation includes a fuel supplying and compressing step of compressing gas in the combustion chamber while supplying fuel into the combustion chamber, a burning step of burning an air fuel mixture as a mixture of the supplied fuel and the gas, and an air supply, scavenging, and exhaust step of discharging the gas from the combustion chamber while supplying the gas into the combustion chamber, and
the four-cycle operation further includes, after the air supply, scavenging, and exhaust step, an exhaust step of further discharging the burned air fuel mixture, an intake step of sucking the air into the combustion chamber, and an exhaust step of discharging the sucked gas.

4. An internal combustion engine according to claim 3, wherein the detecting means detects the information after the air supply, scavenging, and exhaust step.

5. An internal combustion engine according to claim 3 or 4, wherein, in a state of the two-cycle operation, the control means
(1) brings the valve body in the open state into the closed state in the fuel supplying and compressing step when the two-cycle operation is maintained, and
(2) maintains the valve body in the open state in the exhaust step after the air supply, scavenging, and exhaust step when the two-cycle operation is switched to the four-cycle operation.

6. An internal combustion engine according to any one of claims 3 to 5, wherein, in a state of the four-cycle operation, the control means
(1) maintains the valve body in the open state in the exhaust step after the air supply, scavenging, and exhaust step when the four-cycle operation is maintained, and
(2) brings the valve body in the open state into the closed state in the air supply, scavenging, and exhaust step when the four-cycle operation is switched to the two-cycle operation.

7. An internal combustion engine according to any one of claims 1 to 6, further comprising an accelerator pedal, wherein
the detecting means detects, as a current value, the throttle opening at the time when the accelerator pedal is stepped on.

8. An internal combustion engine according to any one of claims 1 to 7, wherein the cylinder includes a cylinder main body that houses the piston and a cylinder head set above the cylinder main body.

9. An internal combustion engine according to claim 8, wherein
the valve body is rotatably set on the cylinder head and formed in a substantially spherical shape having a through hole, and
according to the rotation of the valve body, in the open state, the combustion chamber and the exhaust passage communicate with each other through the through hole and, in the closed state, one end or both ends of the through hole are closed by an inner wall of the cylinder head and the combustion chamber and the exhaust passage are shut off.

10. An internal combustion engine according to claim 9, wherein a rotation axis of the valve body is substantially parallel to the exhaust passage.

11. An internal combustion engine according to claim 9 or 10, further comprising an actuator that rotates the valve body.

12. An internal combustion engine according to claim 11, wherein the actuator includes an annular worm wheel provided in an outer periphery of the valve body, a worm that meshes with the worm wheel, and a motor that drives to rotate the worm.

13. An internal combustion engine according to claim 12, wherein the motor is a stepping motor.

14. An internal combustion engine according to claim 12 or 13, wherein
the worm wheel projects from a surface of the valve body, and
the internal combustion engine further includes annular valve body supporting members that come into contact with sides of the worm wheel and rotatably support the valve body.

15. An internal combustion engine according to claim 14, wherein the valve body supporting members are provided on both sides of the worm wheel across the worm wheel.

16. An internal combustion engine according to any one of claims 9 to 15, wherein the internal combustion engine includes seal means for preventing leakage of fluid, at least a part of the seal means being located between the cylinder head and the valve body.

17. An internal combustion engine according to claim 16, wherein the seal means includes an oil seal that prevents leakage of lubricant.

18. An internal combustion engine according to claim 16 or 17, wherein the seal means includes a gas seal that prevents leakage of the gas in the combustion chamber.

19. An internal combustion engine according to any one of claims 16 to 18, wherein the seal means displays a seal function thereof regardless of a rotation angle of the valve body.

20. An internal combustion engine according to claim 16, wherein
the seal means includes an oil seal that prevents leakage of lubricant and a gas seal that prevents leakage of the gas in the combustion chamber,
the oil seal displays a seal function thereof regardless of a rotation angle of the valve body, and
the gas seal displays a seal function thereof in synchronization with the rotation of the valve body.

21. An internal combustion engine according to claim 20, further comprising means for causing the oil seal and/or the gas seal to increase the seal function thereof when the valve body is in the closed state.

22. An internal combustion engine according to any one of claims 16 to 21, further comprising urging means for urging at least a part of the seal means to be pressed against the valve body.

23. An internal combustion engine according to claim 22, wherein an urging force generated by the urging means changes in synchronization with the rotation of the valve body.

24. An internal combustion engine according to claim 22 or 23, wherein the urging force generated by the urging means is larger in the closed state than in the open state.

25. An internal combustion engine according to any one of claims 16 to 24, further comprising a pressure transmission path for transmitting the pressure in the combustion chamber, wherein
the internal combustion engine presses the seal means against the valve body by transmitting the pressure in the combustion chamber to at least a part of the seal means via the pressure transmission path and causes the seal means to display or increase the seal function.
